# EUROPEAN PATENT APPLICATION

(11) **EP 1 681 867 A1**
(43) Date of publication of application: **19.07.2006**
(21) Application number: 06100003.0
(22) Date of filing: 02.01.2006
(51) Int. Cl.: H04N 5/76

(54) **Method for recording an a/v signal**

(30) Priority: 12.01.2005 EP 05300024
(71) Applicant: Thomson Licensing, 92100 Boulogne-Billancourt (FR)
(72) Inventor: Dumont, Frank, 269564 Singapore (SG)
(74) Representative: Thies, Stephan

(57) **Abstract**

The present invention relates to a method for recording an a/v signal on a recording medium, and to an apparatus for reading from and writing to recording media performing such method.

It is an object of the invention to propose a method for recording an a/v signal on a recording medium capable of optimizing the use of the available storage space when the a/v signal has segments with a low signal quality. This object is achieved by a method having the steps of:
- receiving (1) an a/v signal;
- determining (2) a quality indication value indicating the quality of the received a/v signal; and
- comparing (3) the quality indication value with a predefined threshold value;
wherein a recording bit rate is automatically adjusted (5) to the lowest possible recording bit rate when the determined quality indication value is lower than the predefined threshold value.

## Description

The present invention relates to a method for recording an a/v signal on a recording medium, and to an apparatus for reading from and writing to recording media performing such method.

When a/v data are copied from a tape to a further recording medium, e.g. when a film is copied from a camcorder tape to a DVD (digital versatile disk), there is the problem that unrecorded segments or segments with a very low signal quality exist on the tape. Furthermore, this problem does not only occur during copying from a tape. Segments with a very low signal quality may be encountered whenever an a/v signal is received for recording from an a/v source, e.g. an analog or digital tuner or an optical disk drive. These segments shall usually not be included in the new recording, as they unnecessarily occupy the available storage space.

A couple of solutions to prevent the unrecorded or low-quality segments from unnecessarily occupying storage space are known. For example, the user may continuously check for the occurrence of such segments during the recording process, and manually interrupt the recording process. This solution is, however, not very convenient for the user.

A further solution is described in JP-2195551. A video recorder constantly analyzes the quality of the a/v signal and switches from a recording mode into a pause mode when the signal quality is insufficient. If the signal quality remains low for a longer period of time, the video recorder switches to a stop mode. When the signal quality improves, the video recorder switches back into the recording mode. This solution has the advantage that the recording process does not need to be controlled by the user. However, if a low signal quality is detected by mistake, a correct segment is not recorded and the complete recording operation may have to be repeated. In addition, segments can occur, which the user wants to have recorded despite a low signal quality.

It is an object of the invention to propose a method for recording an a/v signal on a recording medium capable of optimizing the use of the available storage space when the a/v signal has segments with a low signal quality.

According to the invention, this object is achieved by a method for recording an a/v signal on a recording medium, having the steps of:
- receiving an a/v signal;
- determining a quality indication value indicating the quality of the received a/v signal; and
- comparing the quality indication value with a predefined threshold value;
wherein a recording bit rate is automatically adjusted to the lowest possible recording bit rate when the determined quality indication value is lower than the predefined threshold value. By permanently or at least repeatedly monitoring the quality of the a/v input signal it is ensured that without any user control during the recording process the least possible recording space is used for recording low-quality a/v signal segments. At the same time these signal segments are not completely lost. As their quality on the recording medium is dissatisfactory anyway, it does not significantly decrease due to recording with the lowest possible recording bit rate. When the quality of the a/v input signal is above the threshold again, recording at the normal bit rate is continued.

Advantageously, the quality indication value is compared with two or more threshold values, each having an associated recording bit rate decreasing with decreasing threshold value, and the recording bit rate is adjusted to the recording bit rate associated with the lowest threshold value above the quality indication value. This allows to adjust the bit rate used for recording more accurately to the quality of the input a/v signal. For a high quality input a/v signal, the highest bit rate is used, while with decreasing quality the bit rate is gradually lowered. In this way the available storage space is optimally used without loosing a significant amount of recording quality.

Favorably, a/v signal segments are marked as temporarily erased on the recording medium when the determined quality indication value is lower than at least one of the predefined threshold values. In this way upon playback of the recorded a/v input signal the low quality segments, which are likely to annoy the user, are not reproduced. However, the user still has the possibility to unerase one or more of these segments if desired. In order to access the temporarily erased segments preferably a table indicating a/v signal segments on the recording medium for which the determined quality indication value is lower than at least one of the predefined threshold values is generated. This table can either be stored on the recording medium or kept in a memory of a recording device for a predetermined amount of time. In the latter case the user is requested to indicate after the recording process which segments are to be unerased before the table is deleted from the device memory.

Advantageously, different predefined threshold values are used for different signal sources. For example, a higher threshold value is appropriate for a high quality signal source, while for a low quality signal source a low threshold value should be used. Similarly, different threshold values are preferably used for signal sources which are likely to exhibit unrecorded segments, such as a tape, and signal sources where this is not the case.

Favorably, the predefined threshold values are adjustable by the user. As different user might perceive different signal qualities as unacceptable, adjustable threshold values allow the user to adapt the threshold values to his own perception of quality.

Preferably, an apparatus for reading from and writing to recording media performs a method according to the invention for recording an a/v signal on a recording medium. Such an apparatus is for example, a hard disk recorder, a recorder for optical recording media, or a tape recorder. Of course, the invention is likewise applicable to other types of recorders.

For a better understanding the invention shall now be explained in more detail in the following description with reference to the figures. It is understood that the invention is not limited to this exemplary embodiment and that specified features can also expediently be combined and/or modified without departing from the scope of the present invention. In the figures:
- Fig. 1: depicts a method according to the invention for recording an a/v input signal, and
- Fig. 2: schematically shows an apparatus for performing a method according to the invention.

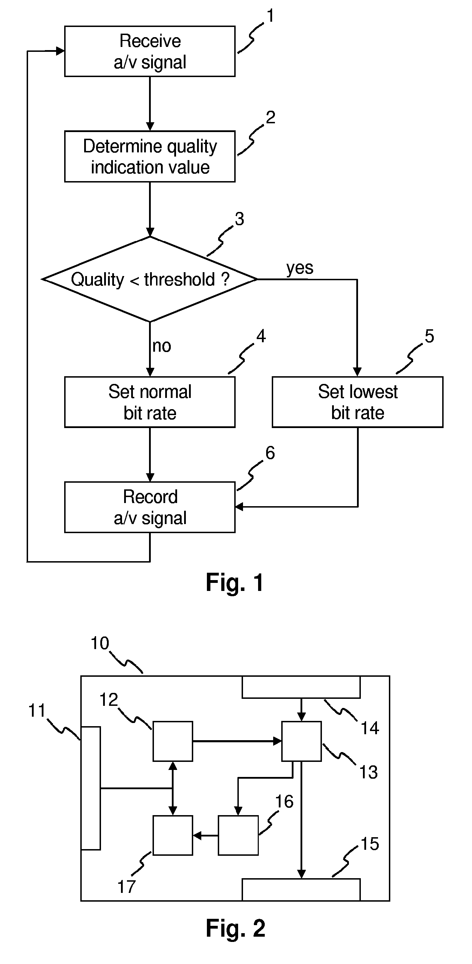

In Fig. 1 a method according to the invention for recording an a/v input signal is depicted. Upon receiving 1 an a/v signal, a quality indication value 2 is determined. This quality indication value is compared 3 with a threshold value. If the quality of the a/v signal is above the threshold, the bit rate used for recording is set 4 to the normal bit rate, e.g. the bit rate chosen by the user or automatically determined based on the available storage space. If, however, the quality of the a/v signal is below the threshold, the bit rate for recording is set 5 to the lowest possible bit rate, in order not no waste storage space for recording a low quality a/v signal. The a/v signal is then recorded 6 on a recording medium. Instead of comparing 3 the quality indication value with a single threshold value, it is likewise possible to compare 3 the quality indication value with a plurality of threshold values. In this case different staggered bit rates are used for recording in accordance with the quality of the a/v input signal.

Fig. 2 schematically shows an apparatus 10 for recording an a/v input signal. The a/v input signal is received at an input 11 and relayed to a recording unit 17 and a unit 12 for determining a quality indication value for the received a/v input signal. This quality indication value is output to a comparing unit 13, which compares the quality indication value with a threshold value. The threshold value is either fixed or adjustable, e.g. by a user input via a user interface 14. It is likewise possible to automatically determine the threshold value based on the normal bit rate specified for the current recording, e.g. by using a larger threshold value when a larger normal bit rate is specified, or based on the average quality of the a/v input signal. For example, for a low average quality of the a/v input signal the threshold value should be set lower than for a high average quality. Optionally the determined threshold value and/or the quality indication value can be indicated to the user via an indication means 15, e.g. a display or indicator lamps. The result obtained by the comparing unit 13 is transmitted to a bit rate setting means 16, which determines a bite rate to be used for recording and adapts the recording unit 17 accordingly.

## Claims

1. Method for recording (6) an a/v signal on a recording medium, having the steps of:
- receiving (1) an a/v signal;
- determining (2) a quality indication value indicating the quality of the received a/v signal; and
- comparing (3) the quality indication value with a predefined threshold value;
wherein a recording bit rate is automatically adjusted (5) to the lowest possible recording bit rate when the determined quality indication value is lower than the predefined threshold value.

2. Method according to claim 1, wherein the quality indication value is compared (3) with two or more threshold values, each having an associated recording bit rate decreasing with decreasing threshold value, and the recording bit rate is adjusted (5) to the recording bit rate associated with the lowest threshold value above the quality indication value.

3. Method according to claim 1 or 2, wherein a/v signal segments are marked as temporarily erased on the recording medium when the determined quality indication value is lower than at least one of the predefined threshold values.

4. Method according to one of claims 1 to 3, further including the step of generating a table indicating a/v signal segments on the recording medium for which the determined quality indication value is lower than at least one of the predefined threshold values.

5. Method according to one of claims 1 to 4, wherein different predefined threshold values are used for different signal sources.

6. Method according to one of claims 1 to 5, wherein the predefined threshold values are adjustable by a user.

7. Method according to one of claims 1 to 6, wherein the a/v signal is received from a tape.

8. Apparatus for reading from and writing to recording media, **characterized in that** is performs a method according to one of claims 1 to 7 for recording an a/v signal on a recording medium.
